# EUROPÄISCHE PATENTSCHRIFT

(11) **EP 0 724 666 B1**
(45) Veröffentlichungstag und Bekanntmachung des Hinweises auf die Patenterteilung: **08.03.2000**
(21) Anmeldenummer: 95928493.6
(22) Anmeldetag: 31.07.1995
(51) Int. Cl.: D21H 23/32

(54) **VORRICHTUNG ZUM IMPRÄGNIEREN VON BAHNEN AUS PORÖSEM MATERIAL**
DEVICE FOR IMPREGNATING WEBS MADE OF POROUS MATERIAL
DISPOSITIF D'IMPREGNATION DE BANDES EN MATERIAU POREUX

(30) Priorität: 24.08.1994 DE 4429939; 07.02.1995 DE 29501918 U
(43) Veröffentlichungstag der Anmeldung: 07.08.1996
(73) Patentinhaber: VITS MASCHINENBAU GMBH, W-40764 Langenfeld (DE)
(72) Erfinder: DÜRR, Wolfram, D-47803 Krefeld (DE); KLAS, Ernst, D-53721 Siegburg (DE); UNGER, Udo, D-42799 Leichlingen (DE)
(74) Vertreter: Frese-Göddeke, Beate, Dr.
(86) Internationale Anmeldenummer: EP9503029
(87) Internationale Veröffentlichungsnummer: WO9606227

(56) Entgegenhaltungen:
- EP-A- 0 173 519
- GB-A- 2 133 322
- DATABASE WPI Section Ch, Week 8520 Derwent Publications Ltd., London, GB; Class A32, AN 85-120764 & SU,A,1 080 289 ( PEGLOVSKII V L) , 23.Januar 1985
- DATABASE WPI Section Ch, Week 8520 Derwent Publications Ltd., London, GB; Class A32, AN 85-120730 & SU,A,1 051 787 ( PEGLOVSKII V L) , 23.Januar 1985

## Beschreibung

Die Erfindung betrifft eine Vorrichtung gemäß dem Oberbegriff des Patentanspruchs 1.

Aus der EP 0 173 519 B1, von der die Erfindung ausgeht, ist es bekannt, die Imprägnierung unter erhöhtem Druck durchzuführen. Dadurch kann eine erheblich größere Menge an Tränkungsmittel in das Substrat eingebracht werden als bei der drucklosen Imprägnierung. Es wird z.B. möglich, dichtere Papiere mit geringem Saugvermögen zu imprägnieren. Ferner eröffnet sich die Möglichkeit, Tränkungsmittel mit hoher Viskosität, d.h. mit hohem Feststoffgehalt und verringertem Lösemittelanteil, einzusetzen. Die erforderliche Druckerhöhung wird insbesondere dadurch erreicht, daß die Kammer, die das Tränkungsmittel aufnimmt, sich vom Einlaufschlitz in Richtung auf den Auslaufschlitz stetig verengt. Die durchlaufende Bahn treibt die an ihrer Oberfläche anhaftende Grenzschicht des Tränkungsmittels in den verengten Bereich der Kammer. Dadurch nimmt der Druck in der Kammer in Richtung auf den Auslaufschlitz stetig zu. Bei Durchlaufgeschwindigkeiten von etwa 45 bzw. 60 m/s werden nach Angaben der genannten Schrift in der Nähe des Auslaufschlitzes Drücke erreicht, die deutlich über 1 MPa liegen. Wenn das Tränkungsmittel über eine Druckpumpe zugeführt wird, addiert sich der von der Druckpumpe erzeugte statische Druck zu dem in der Kammer erzeugten dynamischen Druck.

Bei der bekannten Druckimprägniervorrichtung ist die Abdichtung der Kammer mit erheblichen Problemen verbunden. Am Einlaufschlitz und am Auslaufschlitz sind Dichtlippen angebracht, die an die durchlaufende Bahn und an die von der Bahn nicht bedeckten Randzonen der Walzenoberfläche angedrückt werden. Es hat sich gezeigt, daß durch die Dichtlippen Flusen von der durchlaufenden Bahn abgelöst werden, die sich am Auslaufschlitz ansammeln und Störungen verursachen können.

An den Stirnseiten der Walze befindet sich zwischen Walzenmantel und Walzenzapfen ein ringförmiger Hohlraum. Darin sitzt ein drehfest mit der Walze verbundener Ringkolben, der in axialer Richtung gleiten kann. Durch Zufuhr von Druckluft ist der Ringkolben, der aus Bronze besteht, mit seinen Endflächen dicht an die Stirnwand des Troges anpreßbar. Durch Bohrungen kann einem in der Endfläche des Ringkolbens angebrachten Ringnut Schmieröl zugeführt werden. Diese Dichtung ist sehr kompliziert und teuer. Außerdem hat sie den Nachteil, daß Tränkungsmittel zwischen den Gleitflächen eindringen und diese verkleben kann.

Bei der bekannten Vorrichtung ist der Walzenmantel auf der gesamten Länge mit gewindeähnlich angeordneten Rillen versehen. Die Rillen sollen flüssiges Tränkungsmittel, welches durch die Poren der Warenbahn hindurchgedrückt worden ist, aufnehmen und in den Trog zurückführen. Durch die Rillen kann auch Luft entweichen, die durch das Tränkungsmittel aus den Poren verdrängt worden ist.

Wenn die Breite der zu imprägnierenden Bahn kleiner ist als die Walzenlänge, dann bleiben seitliche Bereiche der Walzen unbedeckt. Die Folge ist, daß an den Abdichtungen am Einlaufschlitz und insbesondere am Auslaufschlitz durch die Rillen Tränkungsmittel ausfließt.

Thema einer Veröffentlichung in DE-Z COATING 9/10, S. 336-341, ist das dosierte Aufbringen fließfähiger Substanzen auf durchlaufende Bahnen mit Hilfe von Rasterwalzen. Es werden verschiedene Rasterformen angegeben, darunter insbesondere solche, bei denen der Walzenmantel mit regelmäßig angeordneten, als "Näpfchen" bezeichneten kleinen Vertiefungen versehen ist, die z.B. die Form von spitzen oder stumpfen Pyramiden haben und voneinander durch schmale Stege getrennt sind. Es werden Auftragvorrichtungen beschrieben, bei denen die Rasterwalze mit einem Teil ihres Umfanges in einen Trog eintaucht, der die aufzutragende Substanz enthält. Dabei werden die Näpfchen gefüllt, und die Substanz wird auf diese Weise von der rotierenden Rasterwalze aufgenommen. Überschüssige Substanz wird abgerakelt, so daß die Rasterwalze stets die gleiche Menge an Substanz mitführt. Die Substanz wird auf die außerhalb des Troges vorbeigeführte Bahn übertragen. Die Übertragung erfolgt entweder durch direkte Berührung zwischen Rasterwalze und Bahn oder indirekt über eine zwischengeschaltete Auftragswalze.

Der Erfindung liegt die Aufgabe zugrunde, eine Vorrichtung gemäß dem Oberbegriff des Anspruchs 1 mit einem verbesserten Dichtungssystem zu schaffen.

Diese Aufgabe wird durch die kennzeichnenden Merkmale des Anspruchs 1 gelöst.

Bevorzugte Ausführungen und Ausgestaltungen der Erfindung sind Gegenstand der Ansprüche 2 bis 7.

Die Zeichnung dient zur Erläuterung der Erfindung anhand von vereinfacht dargestellten Ausführungsbeispielen.
- Figur 1: zeigt einen Querschnitt des ersten Ausführungsbeispiels.
- Figur 2: zeigt einen Längsschnitt.

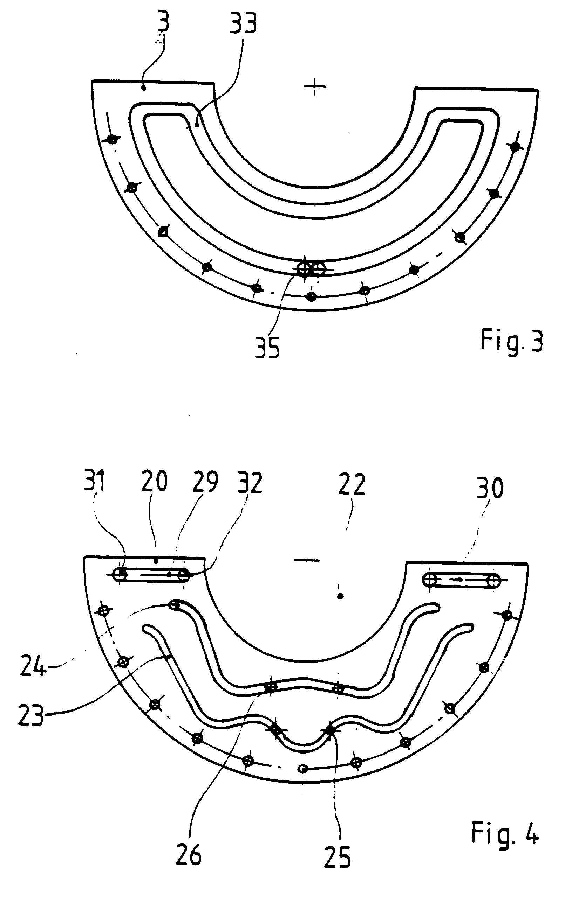

- Figur 3: zeigt die Innenseite einer Stirnwand.
- Figur 4: zeigt die Innenseite einer Dichtungsplatte.
- Figur 5: veranschaulicht ein Drosselorgan.
- Figur 6: zeigt vereinfacht für ein anderes Ausführungsbeispiel einen Längsschnitt
- Figur 7: zeigt das andere Ausführungsbeispiel mit einem Drosselorgan entsprechend Figur 5.
- Figur 8: zeigt für das andere Ausführungsbeispiel einen Ausschnitt aus einer Abwicklung der Mantelfläche der Walze.

In einen Trog 1, der im wesentlichen aus einem Grundkörper 2 und aus ebenen Stirnwänden 3, 4 besteht, taucht teilweise eine Walze 5 ein, die in einem nicht dargestellten heb- und senkbaren Obergestell drehbar gelagert und mit einem ebenfalls nicht dargestellten Antrieb versehen ist. Der Grundkörper 2 hat einen bogenförmigen Querschnitt und bildet annähernd einen Halbzylinder. Zwischen der konkaven Innenfläche des Grundkörpers 2 und der Mantelfläche der Walze 5 befindet sich eine Kammer 6, deren Weite, in radialer Richtung gemessen, von einem Einlaufschlitz 7 in Richtung auf einen Auslaufschlitz 8 stetig abnimmt, so daß sie am Auslaufschlitz 8 kaum größer ist als die Dicke einer zu beschichtenden Papierbahn. Dies ist in der bereits erwähnten EP 0 173 519 B1, auf die hiermit Bezug genommen wird, ausführlich beschrieben.

In die Kammer 6 mündet in der Nähe des Einlaufschlitzes 7 eine Zuleitung 9 für ein Tränkungsmittel ein. Die Zuleitung 9 durchdringt den Grundkörper 2 und ist mit einer nicht dargestellten Druckpumpe verbunden.

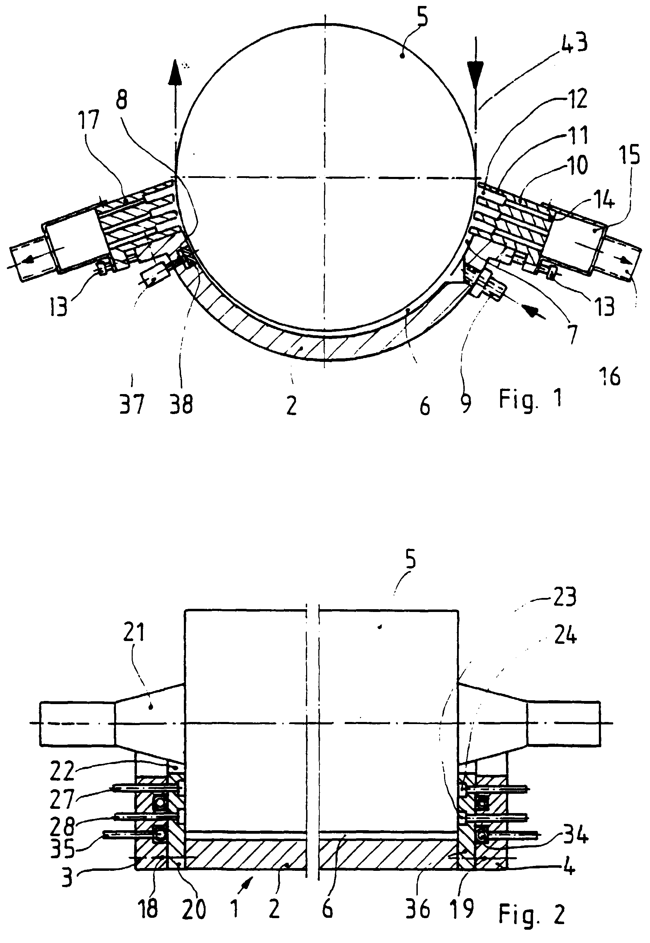

Am Einlaufschlitz 7 ist ein Dichtungsblock 10 angeordnet, der sich von der Stirnwand 3 bis zur Stirnwand 4 erstreckt. Auf der Seite, die der Walze 5 zugekehrt ist, sind abwechselnd Leisten 11 und Rillen 12 angeordnet, so daß der in Figur 1 sichtbare Querschnitt etwa einem Kamm gleicht. Die unterbrochene Linie, die im Querschnitt die Außenflächen der Leisten veranschaulicht, ist dem Walzenquerschnitt angepaßt, so daß zwischen den Außenfläche der Leisten 11 und der Mantelfläche der Walze 5 enge Spalte bestehen. Die Weite der Spalte läßt sich durch eine annähernd radiale Feineinstellung, in Figur 1 als Schraube 13 dargestellt, verändern. Jede Rille 12 ist mit mehreren über die Länge verteilten Abflußöffnungen 14 versehen, die den Dichtblock 10 durchdringen und in einen Kanal 15 einmünden, von dem ein Abflußrohr 16 ausgeht. Ein entsprechender Dichtungsblock 17 ist am Auslaufspalt 8 angebracht.

Die Stirnwände 3, 4 sind durch Schrauben 18, 19 mit dem Grundkörper 2 verbunden. Zwischen Stirnwand 3 und Grundkörper 2 ist eine Dichtungsplatte 20 eingespannt. Sie ist etwa halbkreisförmig und hat im Bereich des Wellenzapfens 21 eine Ausnehmung 22. Hergestellt ist sie aus dem biegsamen, verschleißfesten Kunststoff, der gegen Metall einen niedrigen Reibungskoeffizienten hat. Die Dichtungsplatte 20 ist mit Rillen 23, 24 versehen, die sich im wesentlichen über die Breite erstrecken und einen gekrümmten, etwa wellenähnlichen Verlauf haben. Die Rillen 23, 24 haben Abflußöffnungen 25, 26, von denen Abflußrohre 27, 28 ausgehen, welche durch die Stirnwand 3 hindurch nach außen geführt sind. Beiderseits neben der Ausnehmung 22 sind kurze, etwa waagerechte Rillen 29, 30 angebracht. Jede von ihnen ist mit einer Zuströmöffnung 31 und einer Abströmöffnung 32 für eine Reinigungsflüssigkeit versehen.

Die Seitenwand 3 hat eine umlaufende Nut 33, die in annähernd konstantem Abstand an ihren Rändern entlangläuft. In der Nut 33 liegt ein elastisch aufweitbarer Schlauch 34. Dieser ist durch eine Zuleitung 35 an eine nicht dargestellte Druckleitung anschließbar. Spiegelsymmetrisch zu der Stirnwand 3 ist die Stirnwand 4, spiegelsymmetrisch zu der Dichtungsplatte 20 eine Dichtungsplatte 36 mit den entsprechenden Anschlüssen ausgebildet.

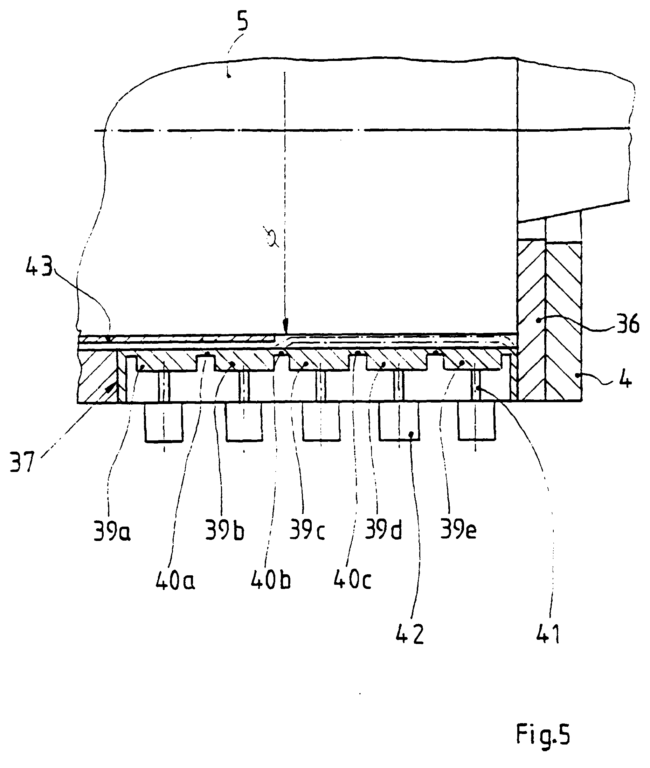

Gemäß Figur 5, in der die Stirnwand 4 mit der zugehörigen Dichtungsplatte 36 vereinfacht dargestellt ist, sind in der zur Stirnwand 4 benachbarten Randzone sowohl am Einlaufschlitz 7 als auch am Auslaufschlitz 8 zusätzliche Drosselorgane 37 vorgesehen. Das gleiche gilt für die in Figur 5 nicht sichtbare gegenüberliegende Seite. Ein derartiges Drosselorgan liegt, wie aus Figur 1 ersichtlich, in einer Längsnut 38, die in kurzem Abstand unter dem Dichtungsblock 17 in die Innenfläche des Grundkörpers 2 eingefräst ist und sich vom Rand etwa über ein Viertel der Gesamtlänge erstreckt. Es ist aus einem biegesteifen Kunststoffprofil hergestellt und in Längsrichtung in mehrere Abschnitte 39a, 39b usw. unterteilt. Zwischen den einzelnen Abschnitten ist der Querschnitt des Kunststoffprofils geschwächt, so daß die Zwischenabschnitte 40a, 40b usw. biegsam sind und fast wie Gelenke wirken. An jedem Abschnitt 39a, 39b usw. greift eine Kolbenstange 41 an, die den Grundkörper 2 durchdringt. Sie ist mittels eines Hydraulikzylinders 42 in kleinen Schritten in Richtung radial zur Walze 5 verstellbar.

Im Betrieb wird eine zu tränkende Papierbahn 43, die die Walze 5 etwa auf der Hälfte des Umfangs umschlingt, durch den Einlaufschlitz 7 der Kammer 6 zugeführt. Die imprägnierte Bahn verläßt die Kammer 6 durch den Auslaufschlitz 8. Über die Zuleitung 9 wird der Kammer 6 Tränkungsmittel zugeführt, vorzugsweise unter erhöhtem Druck von z.B. 0,2 bis 1,0 MPa. Infolge der Verengung bildet sich durch den Schleppeffekt der hindurchbewegten Bahn in der Kammer 6 ein Druckgradient aus, so daß der Druck in der Nähe des Auslaufschlitzes 8 wesentlich höher liegt als der Druck, mit dem das Tränkungsmittel zugeführt wird.

An den Dichtungsblöcken 10, 17 werden zwischen den Außenflächen der Leisten 11 und der auf der Walze 5 aufliegenden Papierbahn 43 mit den Schrauben 13 enge Spalte eingestellt, so daß die Leisten 11 die zu imprägnierende Bahn 43 und die Walze 5 nicht berühren. Durch die Spalte derjenigen Leisten 11, die dem Einlaufschlitz 7 bzw. dem Auslaufschlitz 8 unmittelbar benachbart sind, tritt kontinuierlich ein geringer Strom des Tränkungsmittels aus der Kammer 6 aus, gelangt in die benachbarte Rille 12 und fließt nahezu drucklos über die Bohrungen 14 zu dem Sammelkanal 15 und von dort über das Abflußrohr 16 zu einem nicht dargestellten Sammelbehälter, z.B. zur Vorlage der Pumpe, die das Tränkungsmittel in die Zuleitung 9 hineindrückt. Die spalte der weiteren Leisten 11 werden höchstens von sehr geringen Mengen des Tränkungsmittels durchsetzt, die gegebenenfalls durch die entsprechenden Rillen 12 abfließen. Die an dem auslaufseitigen Dichtungsblock 17 austretende Menge kann ein wenig größer sein als an der Einlaufseite. Das ist einerseits durch den erhöhten Druck am Auslaufschlitz 8 bedingt, andererseits dadurch, daß die von der rotierenden Walze 5 auf die austretende Flüssigkeit ausgeübte Schleppkraft am Einlaufschlitz 7 in die Kammer 6 hineingerichtet ist, am Auslaufschlitz 8 jedoch nach außen.

Wenn die Breite der durchlaufenden Papierbahn geringer ist als die Länge der Walze 5, dann bleibt an jeder Seite der Walze 5 eine Randzone unbedeckt. Bei dem in Figur 5 veranschaulichten Beispiel entspricht die unbedeckte Randzone etwa dem Bereich, in dem die Abschnitte 39c bis 39e des Drosselorgans 37 angeordnet sind. Um zu verhindern, daß durch den relativ weiten Spalt zwischen dem unbedeckten Mantel der Walze 5 und den Außenflächen der Leisten 11 ein unerwünscht starker Leckstrom des Tränkungsmittels austritt, werden die Abschnitte 39c bis 39e des Drosselorgans 37 mit Hilfe der zugeordneten Hydraulikzylinder 42 in Richtung auf die Walze 5 vorgeschoben. Der Vorschub entspricht etwa der Dicke der Papierbahn 43. Die Abschnitte 39a, 39b bleiben inaktiv in ihrer Grundstellung, in der ihre der Walze 5 zugekehrte Fläche etwa bündig mit der Innenfläche des Grundkörpers 2 liegt. Der im Kantenbereich der Papierbahn 43 liegende Zwischenabschnitt 40b ermöglicht die erforderliche Deformation des Drosselorgans 37, die in Figur 5 durch gestrichelte Linien angedeutet ist.

Durch die Zuleitung 35 wird der Schlauch 34 mit einem solchen Druck beaufschlagt, daß zwischen der Dichtungsplatte 20 und der Endfläche der Walze 5 ein geringer Strom des aus der Kammer 6 austretenden Tränkungsmittels aufrecht erhalten wird. Die Leckflüssigkeit wirkt als Schmiermittel zwischen Walze 5 und Dichtungsplatte 20. Der Schlauch 34 übt also nur eine relativ geringe Kraft auf die Dichtungsplatte 20 aus. Diese Kraft reicht nicht aus, um die Dichtungsplatte 20 dicht an die Endfläche der Walze 5 anzudrücken. Zwischen der Endfläche und der Dichtungsplatte 20 bestehen also Spalte, die durch die Rillen 23, 24 voneinander getrennt sind. Sie werden durch die Anpreßkraft so klein gehalten, daß der Leckstrom des Tränkungsmittels ein vorgegebenes Maß nicht überschreitet. Entsprechendes gilt für die Dichtungsplatte 36.

Zur Reinigung wird bei rotierender Walze 5 eine Flüssigkeit den Rillen 29, 30 zugeführt. Die Flüssigkeit verteilt sich über die Endflächen der Walze 5, wobei sie teilweise auch in die Rillen 23, 24 gelangt. Über die Abströmöffnung 32 sowie über die Abflußöffnungen 25, 26 kann sie abfließen.

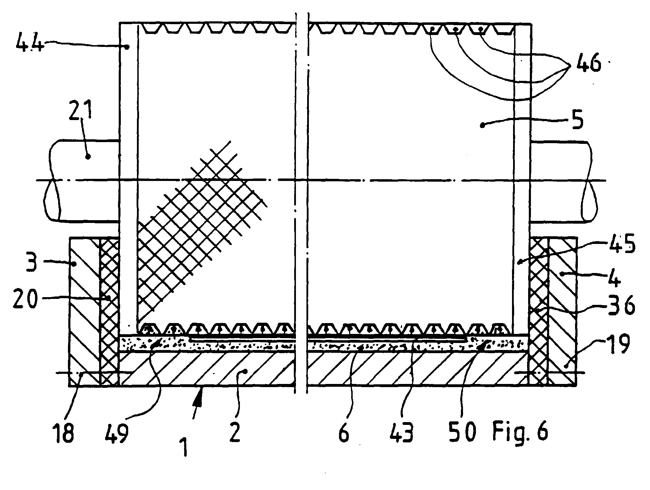

Das in den Figuren 6 bis 8 dargestellte, bevorzugte Ausführungsbeispiel unterscheidet sich von dem bisher beschriebenen Ausführungsbeispiel im wesentlichen dadurch, daß der Mantel der Walze 5 mit Ausnahme schmaler Randstreifen 44, 45 mit regelmäßig angeordneten Näpfchen 46 versehen ist, die etwa die Form eines Pyramidenstumpfes mit quadratischer Grundfläche haben. Die Seitenlänge der Grundfläche liegt vorzugsweise zwischen etwa 0,3 und 1,5 mm, die Tiefe zwischen etwa 0,3 und 1 mm. Die Näpfchen 46 sind durch schmale Stege 47, 48 vonaneinander getrennt. Die Außenflächen der Stege 47, 48 liegen in der durch die glatte Außenfläche der Randstreifen 44, 45 definierten zylindrischen Hüllfläche. Die Stege 47 verlaufen in Umfangsrichtung, die Stege 48 liegen parallel zur Achse der Walze 5. Es ist aber auch möglich, die Stege 47, 48 diagonal anzuordnen.

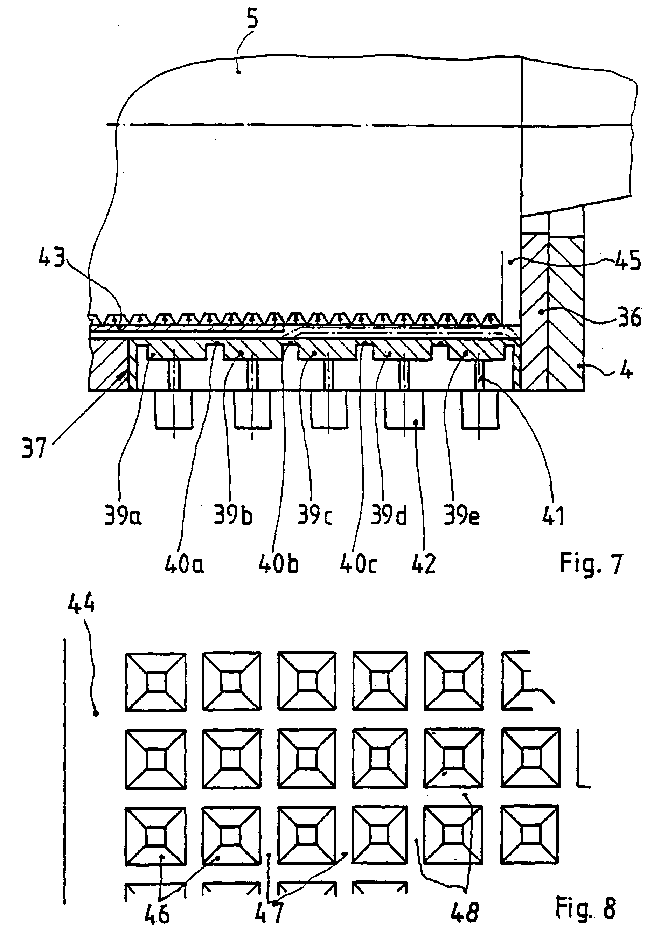

Bei dem in Figur 6 und Figur 7 veranschaulichten Fall ist die Breite der durchlaufenden Papierbahn 43 geringer als die Länge der Walze 5. Nur in dem Bereich, über den sich die Papierbahn 43 erstreckt, sind die Näpfchen 46 abgedeckt. Das Tränkungsmittel wird unter Druck in die Papierbahn 43 hineingedrückt. Die Luft wird aus den Poren verdrängt und entweicht in die Näpfchen 46. Etwaiges durch die Papierbahn 43 hindurchgedrücktes Tränkungsmittel gelangt ebenfalls in die Näpfchen 46. In den seitlichen Bereichen 49, 50, die von der Papierbahn 43 unbedeckt gelassen werden, sind die Näpfchen 46 mit Tränkungsmittel gefüllt. Die zur Achse der Walze 5 parallelen Stege 48 bilden in diesen Bereichen ein System von Sperren, die - im Vergleich zu dem eingangs geschilderten Stand der Technik - den Austritt von Tränkungsmittel erheblich behindern. Zusammen mit den in Umfangsrichtung verlaufenden Stegen 47 bilden sie ein stützendes Netzwerk für die Papierbahn 43. Im übrigen entspricht die Wirkungsweise dem zuerst beschriebenen Ausführungsbeispiel.

## Patentansprüche

1. Vorrichtung zum Imprägnieren von Bahnen aus porösem Material, insbesondere aus Papier oder Pappe, mit einem flüssigen Tränkungsmittel, insbesondere Harz, unter erhöhtem Druck,
mit einer Walze, die um eine waagerechte Achse drehbar und antreibbar ist,
mit einem Trog, in den die Walze teilweise eintaucht, wobei sich zwischen der Innenfläche des Troges und der Mantelfläche der Walze eine Kammer befindet,
mit einer in die Kammer einmündenden Zuleitung für das Tränkungsmittel,
mit einem Einlaufschlitz und einem Auslaufschlitz für die zu imprägnierende Bahn
und mit Dichtungen am Einlaufschlitz und am Auslaufschlitz zwischen Walzenmantel und Trogrand und zwischen den Endflächen der Walze und den stirnseitigen Innenflächen des Troges,
dadurch gekennzeichnet,
daß die Dichtungen nach Art von Labyrinthdichtungen abwechselnd enge Spalte und weite Rillen (12, 23, 24) aufweisen und
daß die Rillen (12, 23, 24) mit Abflußöffnungen (14, 25, 26) für das hindurchströmende Tränkungsmittel versehen sind.

2. Vorrichtung nach Anspruch 1, dadurch gekennzeichnet, daß am Einlaufschlitz (7) und am Auslaufschlitz (8) je ein Dichtungsblock (10, 17) angebracht ist, der an dem Trog (1) befestigt und in einer zur Walze (5) im wesentlichen radialen Richtung verschieblich ist.

3. Vorrichtung nach Anspruch 1 oder 2, dadurch gekennzeichnet, daß zwischen den Endflächen der Walze (5) und den Stirnwänden (3, 4) des Troges (1) mit Rillen (23, 24) versehene Dichtungsplatten (20, 36) angeordnet sind.

4. Vorrichtung nach Anspruch 3, dadurch gekennzeichnet,
daß der Trog (1) im wesentlichen aus einem Grundkörper (2) mit bogenförmigem Querschnitt und aus ebenen Stirnwänden (3, 4) besteht, die mit dem Grundkörper (2) durch Schrauben (18, 19) verbunden sind
daß die Ränder der Dichtungsplatten (20, 36) zwischen dem Grundkörper (2) und den Stirnwänden (3, 4) eingespannt sind und
daß die Stirnwände (3, 4) innenseitig mit Nuten (33) versehen sind, in denen elastisch aufweitbare Schläuche (34) liegen, die durch Anschlußrohre (35) an eine Druckleitung anschließbar sind.

5. Vorrichtung nach einem der Ansprüche 1 bis 4, dadurch gekennzeichnet, daß in den beiden Randzonen des Walzenmantels Drosselorgane (37) angeordnet sind, die sich am Einlaufschlitz (7) und am Auslaufschlitz (8) parallel zu den Dichtungsblöcken (10, 17) erstrecken, und daß an jedem Drosselorgan (37) mehrere Einstellorgane (42) angreifen, mit denen einzelne Abschnitte (39a bis 39e) des Drosselorgans (37) separat einstellbar sind.

6. Vorrichtung nach Anspruch 5, dadurch gekennzeichnet, daß das Drosselorgan (37) aus einem Kunststoffprofil hergestellt ist, welches durch mehrere Zwischenabschnitte (40a, 40b usw.), in denen der Querschnitt geschwächt ist, in Abschnitte (39a bis 39e) unterteilt und zwischen diesen Abschnitten gelenkartig verbiegbar ist.

7. Vorrichtung nach einem der Ansprüche 1 bis 6, dadurch gekennzeichnet, daß die Mantelfläche der Walze (5) mit Vertiefungen versehen ist, die als eng beieinanderliegende, durch Stege (47, 48) getrennte Näpfchen (46) ausgebildet sind.

## Claims

1. Apparatus for impregnating webs of porous material, in particular of paper or cardboard, with a fluid impregnating-agent, in particular resin, under elevated pressure, having a roller which can be rotated and driven about a horizontal axis, having a trough into which part of the roller extends, a chamber being located between the inner surface of the trough and the outer surface of the roller, having an impregnating-agent feed-line which opens into the chamber, having an entry slit and a delivery slit for the web to be impregnated, and having both seals located at the entry slit and the delivery slit so as to be between the roller shell and the trough edge and seals located between the end faces of the roller and the end inner surfaces of the trough, characterised in that the seals alternately have narrow gaps and wide grooves (12, 23, 24) in the manner of labyrinth seals, and in that the grooves (12, 23, 24) are provided with discharge openings (14, 25, 26) for the through-flowing impregnating agent.

2. Apparatus in accordance with Claim 1, characterised in that a sealing block (10, 17) is mounted at the entry slit (7) and the delivery slit (8) respectively, these sealing blocks (10, 17) being secured to the trough (1) and being displaceable in a direction substantially radial to the roller (5).

3. Apparatus in accordance with Claim 1 or 2, characterised in that sealing plates (20, 36) provided with grooves (23, 24) are arranged between the end faces of the roller (5) and the end walls (3, 4) of the trough (1).

4. Apparatus in accordance with Claim 3, characterised in that the trough (1) is substantially composed of a base body (2) with a curved cross-section and of plane end-walls (3, 4) connected to the base body (2) by screws (18, 19), in that the edges of the sealing plates (20, 36) are gripped between the base body (2) and the end walls (3, 4), and in that the inner side of the end walls (3, 4) is provided with channels (33) containing resiliently expandable hoses (34) connectable to a pressure line by connecting pipes (35).

5. Apparatus in accordance with any one of Claims 1 to 4, characterised in that throttling members (37) are arranged in the two edge zones of the roller shell and, at the entry slit (7) and the delivery slit (8), extend parallel to the sealing blocks (10, 17), and in that a plurality of adjusting members (42) act upon each throttling member (37), individual portions (39a to 39e) of the throttling member (37) being adjustable separately by means of these adjusting members (42).

6. Apparatus in accordance with Claim 5, characterised in that the throttling member (37) is manufactured from a plastics section which is divided into portions (39a to 39e) through a plurality of intermediate portions (40a, 40b etc.) of reduced cross-section and which is bendable in an articulation-like manner between these portions (39a to 39e).

7. Apparatus in accordance with any one of Claims 1 to 6, characterised in that the outer surface of the roller (5) is provided with cavities in the form of cups (46) which lie close together and which are separated by webs (47, 48).

## Revendications

1. Dispositif pour imprégner des bandes en matériau poreux, en particulier en papier ou carton, d'un agent d'imprégnation liquide, en particulier de la résine, sous pression élevée,
avec un cylindre qui peut tourner et être entraîné autour d'un axe horizontal,
avec une cuve dans laquelle le cylindre plonge partiellement, et entre la surface intérieure de la cuve et la surface d'enveloppe du cylindre se trouve une chambre,
avec un conduit d'agent d'imprégnation débouchant dans la chambre,
avec une fente d'entrée est une fente de sortie pour la bande à imprégner,
et avec des joints d'étanchéité sur la fente d'entrée et sur la fente de sortie, entre l'enveloppe du cylindre et le bord de la cuve, et entre les surfaces d'extrémité du cylindre et les surfaces frontales intérieures de la cuve,
caractérisé en ce que
les étanchéités du type étanchéités à labyrinthe présentent alternativement des interstices étroits et de larges rainures (12, 23, 24), et en ce que
les rainures (12, 23, 24) sont dotées d'ouvertures d'évacuation (14, 25, 26) pour l'agent d'imprégnation qui les traverse.

2. Dispositif selon la revendication 1, caractérisé en ce qu'un bloc d'étanchéité (10, 17) est chaque fois installé sur la fente d'entrée (7) et sur la fente de sortie (8), est fixé à la cuve (1) et peut coulisser dans une direction essentiellement radiale par rapport au cylindre (5).

3. Dispositif selon la revendication 1 ou 2, caractérisé en ce qu'entre les surfaces d'extrémité du cylindre (5) et les parois frontales (3, 4) de la cuve (1) sont disposées des plaques d'étanchéité (20, 36) dotées de rainures (23, 24).

4. Dispositif selon la revendication 3, caractérisé en ce que
la cuve (1) est essentiellement constituée d'un corps de base (2) à section transversale en arc de cercle et de parois frontales planes (3, 4) qui sont reliées au corps de base (2) par des vis (18, 19),
en ce que les bords des plaques d'étanchéité (20, 36) sont serrés entre le corps de base (2) et les parois frontales (3, 4), et en ce que
les parois frontales (3, 4) sont dotés à l'intérieur de gorges (33) dans lesquelles sont situés des manchons flexibles (34) élastiquement gonflables, qui peuvent être raccordés à un conduit sous pression par des tubes de raccordement (35).

5. Dispositif selon l'une des revendications 1 à 4, caractérisé en ce que des organes d'étranglement (37) sont disposés dans les deux zones de bord de l'enveloppe du cylindre et s'étendent sur la fente d'entrée (7) et sur la fente de sortie (8) parallèlement aux blocs d'étanchéité (10, 17), et en ce que sur chaque organe d'étranglement (37) s'engagent plusieurs organes de réglage (42) par lesquels des tronçons individuels (39a à 39e) de l'organe d'étranglement (37) peuvent être réglés séparément.

6. Dispositif selon la revendication 5, caractérisé en ce que l'organe d'étranglement (37) est réalisé à partir d'un profilé en matière synthétique qui est divisé en tronçons (39a à 39e) par plusieurs tronçons intermédiaires (40e, 40b, etc.) dont la section transversale est affaiblie, et qui peut fléchir à la manière d'une articulation entre ces tronçons.

7. Dispositif selon l'une des revendications 1 à 6, caractérisé an ce que la surface d'enveloppe du cylindre (5) est dotée de creux qui sont configurés comme godets (46) étroitement rapprochés et séparés par des traverses (47, 48).
